(19) Europäisches Patentamt
European Patent Office
Office européen des brevets

(11) **EP 3 510 067 B1**

(12) **EUROPÄISCHE PATENTSCHRIFT**

(45) Veröffentlichungstag und Bekanntmachung des Hinweises auf die Patenterteilung:
**06.10.2021 Patentblatt 2021/40**

(21) Anmeldenummer: **17765361.5**

(22) Anmeldetag: **29.08.2017**

(51) Int Cl.:
*C08G 18/48* (2006.01)     *C08G 18/81* (2006.01)
*C08G 18/63* (2006.01)     *C08G 101/00* (2006.01)

(86) Internationale Anmeldenummer:
**PCT/EP2017/071583**

(87) Internationale Veröffentlichungsnummer:
**WO 2018/046333 (15.03.2018 Gazette 2018/11)**

(54) **MAKROMER ZUM EINSATZ IN POLYMERPOLYOLDISPERSIONEN, SOWIE VERFAHREN ZUR HERSTELLUNG EINES SOLCHEN MAKROMERS**

MACROMER FOR USE IN POLYMER POLYOL DISPERSIONS, AND METHOD FOR PRODUCING SUCH A MACROMER

MACROMÈRE UTILISABLE DANS DES DISPERSIONS DE POLYMÈRE ET PROCÉDÉ DE FABRICATION D'UN TEL MACROMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.09.2016 EP 16187879**

(43) Veröffentlichungstag der Anmeldung:
**17.07.2019 Patentblatt 2019/29**

(73) Patentinhaber: **BASF SE**
**67056 Ludwigshafen am Rhein (DE)**

(72) Erfinder:
• PETROVIC, Dejan
  **49448 Lemfoerde (DE)**
• KOENIG, Christian
  **37056 Ludwigshafen (DE)**

(74) Vertreter: **BASF IP Association**
**BASF SE**
**G-FLP-C006**
**67056 Ludwigshafen (DE)**

(56) Entgegenhaltungen:
EP-A1- 1 624 006          WO-A1-2015/165878
DE-A1-102011 078 170

EP 3 510 067 B1

**Beschreibung**

Die vorliegende Erfindung befasst sich mit einem neuen Makromer zum Einsatz in Polymerpolyoldispersionen, sowie einem Verfahren zur Herstellung eines solchen neuen Makromers. Weiterhin geht es in der vorliegenden Erfindung um ein Verfahren zur Herstellung einer Polymerpolyoldispersion unter Verwendung des neuen Makromers, sowie den Einsatz einer so erzeugbaren Polymerpolyoldispersion zur Herstellung eines Polyurethans.

Zur Herstellung von Polyurethankunststoffen durch Umsetzung von Isocyanaten mit OH-aktiven Substanzen werden in manchen Fällen Polymerpolyoldispersionen (auch "Graft-Polyole" genannt) eingesetzt. Derartige Verfahren sind prinzipiell bekannt.

Zahlreiche Methoden sind bekannt, um ethylenisch ungesättigte Funktionalitäten in Polyole einzuführen und hierdurch Makromere herzustellen. Mehrere Beispiele werden in US 6,013,731 oder EP 0,162,589 aufgezeigt.

Es gibt eine Vielzahl von Varianten, um Polymerpolyoldispersionen herzustellen. Neben dem Einsatz von Makromeren, welche bei der radikalischen Polymerisation zur Herstellung der Polymerpolyen verwendet werden, gibt es auch die Möglichkeit, vorgefertigte Stabilisatoren einzusetzen. Bei vorgefertigten Stabilisatoren handelt es sich um Produkte, die durch Umsetzung von Makromeren, welche reaktive ungesättigte Gruppen tragen, mit radikalisch polymerisierbaren Monomeren erhalten werden. Diese vorgefertigten Stabilisatoren können dann in einer weiteren radikalischen Polymerisation zu Herstellung von Polymerpolydispersionen eingesetzt werden. In EP 1 930 356 B1 zum Beispiel werden ausschließlich solche Verfahren beschrieben.

Es ist bekannt, dass vor allem Moleküle mit großem Molekulargewicht und großem Raumanspruch besonders geeignet sind, um zur Herstellung von effektiven Makromeren verwendet zu werden. Die Effizienz von Makromeren zeichnet sich darin aus, dass eine geringere Menge dieser Verbindung nötig ist, um Polymerpolyoldispersionen mit ausreichender Stabilität, geringer Viskosität und/oder guter Filtrierbarkeit herzustellen.

Wie oben erwähnt ist generell bekannt, dass zur Herstellung und Stabilisierung von Polymerpolyoldispersionen sogenannte Makromere verwendet werden. Hierbei treten jedoch, wie oben angesprochen, immer wieder Probleme auf, da die Verwendung solcher Makromere in vielen Fällen zu Polymerdispersionen führen, die eine hohe Viskosität aufweisen und/oder schlecht zu filtrieren sind, was die Verarbeitung und den Einsatz erschwert.

DE102011078170 beschreibt beispielsweise ein Verfahren zur Herstellung von Makromeren durch Reaktion eines Polyols mit einem ethylenisch ungesättigten Isocyanat in Gegenwart eines Katalysator auf Basis von Zink - und/oder Bismutcarboxylat sowie die Verwendung dieses Makromers zur Herstellung von Polymerdispersionen. In Beispiel A wurden 192 kg einer 6-funktionellen Polyetherols mit eine OH-Zahl von 18.4. mg KOH/g mit 1,69 kg TMI umgesetzt, was 0,9 Gew% 1,1-Dimethyl-meta-isoprenylbenzyl-Isocyanat (TMI) bezogen auf das Endprodukt entspricht. In Beispiel B wird dieses zur Herstellung von Polymerpolyolen eingesetzt. In den Beispielen wird ein Makromer aus einem sechsfunktionellen Polyol (MW 18000) mit 0,8 eq TMI hergestellt. Beansprucht werden Makromere mit F=2-6, OH-Zahl 10-200 mit Zn- oder Bi-Katalysatoren.

WO 20003/09718 beschreibt ein kontinuierliches Verfahren zur Herstellung von Graftpolyolen unter Einsatz von Makromeren. Die hierin beschriebenen Makromere besitzen 0,1 bis 1 mol, bevorzugt 0,2 bis 0,8 mol von ungesättigten Einheiten pro Molekül. In den Beispielen wird bei Makromer B ein dreifunktionelles glycerinbasiertes Polyol mit einem durchschnittlichen Molekulargewicht von 61200 und einer OH-Zahl von 27,5 mg KOH/g durch Umsetzung mit 0,3 mol TMI pro Mol Makromer hergestellt. Diese Makromere werden hierauf folgend zur Herstellung von Graftpolyolen eingesetzt. Die Herstellung von Makromeren auf Basis von Sorbitol-basierten Polyolen ist hierin nicht beschrieben.

US 4522976 beschreibt eine Polymerpolyoldispersion hergestellt durch freie radikalische Polymerisation in Gegenwart eines Makromers mit einem Äquivalenzgewicht von 100 bis 10000, bevorzugt 2000 bis 6000. Die Anzahl der ungesättigten Gruppen dieser Makromere liegen im Bereich von 0.1 mol bis 1.5 mol bezogen auf ein Mol Polyol, bevorzugt jedoch 0,5 bis 1 mol pro Molekül des Polyols. In den Beispielen sind Makromere basierend auf Maleinsäureanhydrid beschrieben.

US20060025491 beschreibt stabile, niederviskose Polyole, die sich durch den Einsatz von vorgefertigten Stabilisatoren herstellen lassen. Die hergestellten Makromere werden zur Herstellung des vorgefertigten Stabilisators verwendet und nicht direkt bei der Herstellung der Polymerpolyoldispersionen zugegeben.

US 5093412 offenbart lagerstabile Makromere, die durch Reaktion mit arylaliphatischer Isocyanaten mit Polyolen hergestellt wurden. Diese Makromere werden zur Herstellung von Graftpolyolen eingesetzt. In Beispiel 1 wird ein dreifunktionelles Polyol mit einer OH-Zahl von 26.6 mg KOH/g mit TMI umgesetzt. Die Anzahl der ungesättigten Gruppen beträgt zwischen 0,4 bis 0,7 mol bezogen auf ein Mol Polyol.

EP 1 624 006 A1 beschreibt Polymerpolyole für Polyurethan-Hartschäume, die aus einem "preformed stabilizer" hergestellt werden. Hierzu ist ein zweistufiges Verfahren erforderlich, wobei zunächst aus einem Makromer ein Stabilisator hergestellt wird, woraus in einem zweiten Schritt das Polymerpolyol erhalten wird. Die Struktur solcher Polymerpolyole unterscheidet sich von vergleichbaren Produkten, die aus einem einstufigen Verfahren ohne Verwendung eines "preformed stabilizer" erhalten werden.

Die bisher bekannten Makromere und Verfahren zu deren Herstellung weisen immer noch einige Nachteile und Probleme auf. So ist oftmals die Viskosität der hieraus hergestellten Dispersionen relativ hoch und/oder die Filtration benötigt eine geraume Zeit.

Es stellte sich somit die Aufgabe, ein Verfahren zur Herstellung eines Makromers zum Einsatz in Polymerpolyoldispersionen bereitzustellen, welches Dispersionen mit möglichst geringer Viskosität und/oder mit guter Filtrierbarkeit liefert.

Es wurde nun überraschender Weise gefunden, dass ein Verfahren zur Herstellung eines Makromers, in welchem eine gewisse Menge einer ungesättigten Isocyanatverbindung, z. B. 1,1-Dimethyl-meta-isoprenylbenzyl-Isocyanat (TMI), eingesetzt wird, die gewünschten Ergebnisse liefert. Nach der Theorie sollte man erwarten, dass 1 Mol TMI pro Polyol optimal sei. Jedoch wurde nun gefunden, dass TMI Gehalte von 1.5 bis 1.8 mol TMI pro Molekül Makromer zu den besten Ergebnissen führen, vor allem was die Filtrierbarkeit angeht.

Der Gegenstand der vorliegenden Erfindung ist somit ein Verfahren zur Herstellung eines Makromers durch katalysierte Umsetzung eines sechsfunktionellen Polyols P mit mindestens einer ungesättigten Isocyanat-Verbindung V, welche mindestens eine mit einer Zerewitinoff-aktiven Verbindung reaktive Isocyanat-Gruppe aufweist, wobei 1,5 bis 1,8 Mol der ungesättigten Isocyanat-Verbindung V, bezogen auf das Endprodukt, und ein Katalysator K eingesetzt werden. Weitere Gegenstände sind auch ein Makromer, herstellbar nach dem erfindungsgemäßen Verfahren, ein Verfahren zur Herstellung einer Polymerpolyoldispersion, wobei mindestens ein Makromer, herstellbar nach dem erfindungsgemäßen Verfahren eingesetzt wird, sowie die Verwendung einer erfindungsgemäße herstellbaren Polymerpolyoldispersion zur Herstellung eines Polyurethans durch Umsetzung mit mindestens einem Di- oder Polyisocyanat und wahlweise mindestens einem Treibmittel.

In einer bevorzugten Ausführungsform des erfindungsgemäßen Verfahrens wird das Makromer M durch Reaktion von 1,1-Dimethyl-meta-isopropenylbenzylisocyanat (TMI) mit einem Polyetherpolyol PM, optional in Gegenwart eines Lewissäure-Katalysators, erhalten.

Bevorzugt liegt der EO-Gehalt des Makromer-Endprodukts zwischen 1 und 25%, bevorzugt 2 und 15%, besonders bevorzugt zwischen 3 und 8%.

Bevorzugt weist die ungesättigte Isocyanat-Verbindung V genau eine mit einer Zerewitinoff-aktiven Verbindung reaktive Isocyanat-Gruppe auf. Besonders bevorzugt ist die ungesättigte Verbindung V 1,1-Dimethyl-meta-isoprenyl-benzyl-Isocyanat (TMI).

Das Polyol P wird in einer Ausführungsform durch Reaktion von Sorbitol mit mindestens einem Alkylenoxid, bevorzugt mit einer Mischung aus Ethylenoxid (EO) und Propylenoxid (PO), unter basischer Katalyse hergestellt. Hierbei ist der basische Katalysator bevorzugt ausgewählt aus der Gruppe bestehend aus Kaliumhydroxid und Cäsiumhydroxid, besonders bevorzugt Cäsiumhydroxid.

In einer besonders bevorzugten Ausführungsform des erfindungsgemäßen Verfahrens wird das Polyol P durch Reaktion von Sorbitol mit einer Mischung aus Ethylenoxid (EO) und Propylenoxid (PO) unter Cäsiumhydroxid-Katalyse hergestellt.

In einer weiteren Ausführungsform des erfindungsgemäßen Verfahrens weist das Polyol P ein Molekulargewicht Mw von 5000 bis 25000 g/mol auf, bevorzugt 7000 bis 22000 g/mol, besonders bevorzugt 10000 bis 19000 g/mol, wobei das Molekulargewicht Mw rechnerisch aus der OH-Zahl bestimmt wird, bestimmt nach DIN 53240 vom November 2007.

Der Katalysator K, der beim erfindungsgemäßen Verfahren zur Herstellung eines Makromers zum Einsatz kommt, enthält vorzugsweise Zinn oder Bismut. Besonders bevorzugt kommt Dibutylzinndilaureat (DBTL) als Katalysator zur Anwendung.

Die katalysierte Umsetzung mit mindestens einer ungesättigten Isocyanat-Verbindung V im erfindungsgemäßen Verfahren zur Herstellung eines Makromers findet in der Regel bei einer Temperatur von 60 bis 150 °C, bevorzugt 80 bis 130 °C, und einem Druck von 0,5 bis 2 bar, bevorzugt 0,8 bis 1,2 bar statt.

Das erfindungsgemäß herstellbare Makromer weist in der Regel ein Molekulargewicht Mw von 5000 bis 25000 g/mol, bevorzugt 7000 bis 22000 g/mol, besonders bevorzugt 1000 bis 19000 g/mol auf, wobei das Molekulargewicht Mw rechnerisch aus der OH-Zahl bestimmt wird, bestimmt nach DIN 53240 vom November 2007.

Wie bereits erwähnt, kann das erfindungsgemäß herstellbare Makromer in einem Verfahren zur Herstellung einer Polymerpolyoldispersion verwendet werden. Hierzu wird beispielsweise 0,5 bis 10 Gew.% mindestens eines nach dem erfindungsgemäßen Verfahren herstellbaren Makromers, bevorzugt 1 bis 8 Gew. %, besonders bevorzugt 2 bis 5 Gew., mit mindestens einem Polyetherpolyol sowie Styrol und Acrylnitil umgesetzt.

Die so herstellbare Polymerpolyoldispersion wiederum kann in einem Verfahren zur Herstellung von Polyurethanschaumstoffen eingesetzt werden. Dazu kann die nach dem erfindungsgemäßen Verfahren herstellbare Polymerpolyoldispersion, gegebenenfalls mit weiteren Polyolverbnidungen, mit mindestens einer Di- oder Polyisocyanatverbindung, wahlweise in Gegenwart mindestens eines Treibmittels, umgesetzt werden.

Messmethoden

Die Bestimmung der Viscosität erfolgte bei 25°C gemäß DIN EN ISO 3219 von 1994 unter Verwendung eines Rheotec RC20 Rotationsviscosimeter unter Verwendung einer Spindel CC 25 DIN (Spindeldurchmesser: 12.5 mm; innerer Durchmesser des Messzylinders: 13.56 mm) bei einer Scherrate von 100 1/s (anstatt von 50 1/s).

Die Bestimmung der OH-Zahl erfolgt nach DIN 53240 von November 2007.

Beispiele

Nachfolgend werden einige Beispiele zur Veranschaulichung der Erfindung angegeben. Diese Beispiele sollen keinesfalls den Umfang der Erfindung einschränken, sondern sind nur illustrierend zu verstehen.

Bei Polyetherol 1 handelt es sich um ein dreifunktionelles Polyetherol basierend auf Glycerin als Starter mit einer Hydroxyzahl von 56 mg KOH/g bestimmt nach DIN 53240, hergestellt durch KOH Katalyse.

Bei dem eingesetzten Polyetherol 2 handelt es sich um ein sechsfunktionelles Polyetherol basierend auf Sorbitol als Starter mit einer Hydroxyzahl von 20,9 mg KOH/g bestimmt nach DIN 53240, hergestellt durch CsOH Katalyse.

Berechnung der alpha,alpha-Dimethyl-meta-isopropenyl benzyl iscocyanat (TMI) Dosiermenge Die Berechnung der eingesetzten TMI-Menge wird wie folgt berechnet. Ausgehend von der Hydroxyzahl des eingesetzten Polyetherols 2 und der Funktionalität wird die mittlere molare Masse berechnet. In diesem Fall ist die Funktionalität des eingesetzten Polyetherols 2 6 und die Hydroxyzahl 20,9 mg KOH/g. Zur Berechnung der Molmasse wird folgende Formel verwendet, wobei es sich bei z um die Funktionalität des Polyetherols handelt:

$$Mn = 1000 mg/g \cdot \frac{z \cdot 56.106 g/Mol}{OHZ[mg/g]}$$

Hierdraus ergibt sich eine berechnete Molmasse von 16107 g/mol. Diese Molmasse wird der Berechnung der zugegebenen Menge TMI zugrunde gelegt. Der Einsatz von beispielsweise 1 Äquivalent TMI pro Molekül Polyetherol im Makromer würde bedeuten, dass z.B. 1 Mol Polyetherol mit 1 Mol TMI umgesetzt wird.

Allgemeine Synthesevorschrift zur Makromerherstellung am Beispiel von Makromer Nummer 2 500 g Polyetherol 2 wurde in einem gerührten Glasreaktor auf 80 °C erhitzt und 60 Minuten bei 8 mbar getrocknet. Anschließend wurde der Glasreaktor inertisiert und 0,03 g Dibutylzinndilaureat (DBTL) hinzugegeben und 30 min gerührt. Anschließend wurde über 30 Minuten bei 80°C 5 g alpha,alpha-Dimethyl meta-isopropenyl benzyl iscocyanat (TMI) zugegeben, was 0,8 Äquivalenten TMI pro Molekül Polyetherol 2 entspricht. Nach Beendigung der Zugabe wurde weitere 180 Minuten bei dieser Temperatur gerührt. Nach der Rührzeit wurde 0,03 g 85% ige Phosphorsäure und 4 mL Ethanol zugegeben und weitere 30 min gerührt. Anschließend wurde 60 Minuten bei 85 °C und 20 mbar evakuiert.

Tabelle 1: Hergestellte Makromere

| Makromer Nummer | Äquivalente TMI pro Molekül Polyetherol 2 im Makromer | Zugegebene Menge TMI in g |
|---|---|---|
| 1 | 0,5 | 3,1 |
| 2 | 0,8 | 5,0 |
| 3 | 1,1 | 6,9 |
| 4 | 1,3 | 8,1 |
| 5 (erfindungsgemäß) | 1,5 | 9,4 |
| 6 (erfindungsgemäß) | 1,8 | 11,2 |
| 7 | 2 | 12,8 |
| 8 | 2,5 | 15,6 |

Allgemeine Versuchsvorschrift zur Herstellung von Polymerpolyolen 517,2 g Polyetherol 1 wurde in einen gerührten Glasreaktor zusammen mit 3,06 g des zuvor hergestellten Makromers vorgelegt und unter Intertgasatmosphäre auf 125 °C erhitzt. Anschließend wurde über 150 min über den ersten Dosierstrom 558,79 g Styrol, 279,32 g Arcylnitril, 8,79 g Dodecanthiol sowie 34,61 g des zuvor hergestellten Makromers zugegeben und über einen zweiten 3,92 g Wako V601 (Dimethyl 2,2'-azobis(2-methylpropionat) gelöst in 517,2 g Polyetherol 1 zugegeben. Nach einer Abreaktionszeit von 15 Minuten wurde das Produkt durch Anlegen eines Vakuums bei 15 mbar von Restmonomeren befreit. Die OH-Zahl der Produkte liegen im Bereich von 31-33 mg KOH/g KOH.

Tabelle 2: Hergestellte Polymerpolyole

| Polymerpolyol Nummer | Makromer Nummer | Viskosität in mPas |
|---|---|---|
| 1 | 1 | 4586 |
| 2 | 2 | 4580 |
| 3 | 3 | 4611 |
| 4 | 4 | 4543 |
| 5 (erfindungsgemäß) | 5 | 4523 |
| 6 (erfindungsgemäß) | 6 | 4654 |
| 7 | 7 | 5008 |
| 8 | 8 | Vergelung |

Filtrationsergebnisse

Zur Untersuchung der Filtrierbarkeit wurden die oben hergestellten Dispersionen durch einen 30 μm großen Spaltkantenfilter bei konstantem Überdruck von 1 bar und 28 °C filtriert und die Menge des filtrierten Materials mit der Zeit verfolgt. Je höher die Filtrationsgeschwindigkeit, desto besser ist das Produkt für die Verarbeitung geeignet.

Tabelle 3: Filtrationsergebnisse der hergestellten Polymerpolyole

| Polymerpolyol Nummer | Äquivalente TMI pro Molekül Polyetherol im Makromer | Gemessene Filtrationsgeschwindigkeit | Filtrationsgeschwindigekeit Berechnet auf 100 s |
|---|---|---|---|
| 1 | 0,5 | 7,8 g in 600 s | 1,3 g |
| 2 | 0,8 | 77,0 g in 600 s | 12,8 g |
| 3 | 1,1 | 184,1 g in 600 s | 30,7 g |
| 4 | 1,3 | 180,4 g in 415 s | 43,5 g |
| 5 (erfindungsgemäß) | 1,5 | 188,8 g in 310 s | 60,9 g |
| 6 (erfindungsgemäß) | 1,8 | 189,5 g in 275 s | 68,9 g |
| 7 | 2 | 38 g in 600 s | 6,3 g |
| 8 | 2,5 | Keine Filtration möglich | Keine Filtration möglich |

Figur 1: Filtrationsgeschwindigkeiten

An dieser Auftragung lässt sich erkennen, dass im Bereich zwischen 1,3 und 1,8 TMI pro Molekül und insbesondere im Bereich zwischen 1,5 und 1,8 TMI pro Molekül überraschenderweise eine besonders hohe Filtrationsgeschwindigkeit möglich ist und somit die hierzu verwendeten Makromere besonders zur Synthese von Graftpolyolen geeignet sind.

**Patentansprüche**

1. Verfahren zur Herstellung eines Makromers durch katalysierte Umsetzung eines sechsfunktionellen Polyols P mit mindestens einer ungesättigten Isocyanat-Verbindung V, welche mindestens eine mit einer Zerewitinoff-aktiven Verbindung reaktive Isocyanat-Gruppe aufweist, wobei 1,5 bis 1,8 Mol der ungesättigten Isocyanat-Verbindung V, bezogen auf das Makromer, und ein Katalysator K eingesetzt werden, wobei die ungesättigte Isocyanat-Verbindung V genau eine mit einer Zerewitinoff-aktiven Verbindung reaktive Isocyanat-Gruppe aufweist und wobei das Polyol P durch Reaktion von Sorbitol mit mindestens einem Alkylenoxid unter basischer Katalyse hergestellt wurde.

2. Verfahren zur Herstellung eines Makromers gemäß Anspruch 1, wobei das Makromer durch Reaktion von 1,1-Dimethyl-meta-isopropenylbenzylisocyanat (TMI) mit einem Polyetherpolyol PM erhalten wird.

3. Verfahren zur Herstellung eines Makromers gemäß einem der Ansprüche 1 bis 2, wobei der EO-Gehalt des Makromers zwischen 1 und 25%, bevorzugt 2 und 15%, besonders bevorzugt zwischen 3 und 8% liegt.

4. Verfahren zur Herstellung eines Makromers gemäß einem der Ansprüche 1 bis 3, wobei mehr als 1,5 bis weniger als 1,8 Mol der ungesättigten Isocyanat-Verbindung V, bezogen auf das Makromer, eingesetzt werden.

5. Verfahren zur Herstellung eines Makromers gemäß einem der Ansprüche 1 bis 4, wobei das Polyol P durch Reaktion von Sorbitol mit einer Mischung aus Ethylenoxid und Propylenoxid unter basischer Katalyse hergestellt wurde, wobei bevorzugt der Anteil von Ethylenoxid im Makromer 1-25 Gew% beträgt, besonders bevorzugt 2-15 Gew%, ganz besonders bevorzugt 3 bis 8 Gew%, bezogen auf die Gesamtmasse des Makromers.

6. Verfahren zur Herstellung eines Makromers gemäß einem der Ansprüche 1 bis 5, wobei das Polyol P durch Reaktion von Sorbitol mit mindestens einem Alkylenoxid unter basischer Katalyse hergestellt wurde, wobei der basische Katalysator ausgewählt ist aus der Gruppe bestehend aus Kaliumhydroxid und Cäsiumhydroxid, bevorzugt Cäsiumhydroxid.

7. Verfahren zur Herstellung eines Makromers gemäß einem der Ansprüche 1 bis 6, wobei das Polyol P ein Molekulargewicht Mw von 5000 bis 25000 g/mol aufweist, bevorzugt 7000 bis 22000 g/mol, besonders bevorzugt 10000 bis 19000 g/mol, wobei das Molekulargewicht Mw rechnerisch aus der OH-Zahl bestimmt wird, bestimmt nach DIN 53240.

8. Verfahren zur Herstellung eines Makromers gemäß einem der Ansprüche 1 bis 7, wobei die ungesättigte Verbindung V 1,1-Dimethyl-meta-isoprenylbenzyl-Isocyanat (TMI) ist.

9. Verfahren zur Herstellung eines Makromers gemäß einem der Ansprüche 1 bis 8, wobei der Katalysator K Zinn oder Bismut enthält.

10. Verfahren zur Herstellung eines Makromers gemäß einem der Ansprüche 1 bis 9, wobei der Katalysator K Dibutylzinndilaureat (DBTL) ist.

11. Verfahren zur Herstellung eines Makromers gemäß einem der Ansprüche 1 bis 10, wobei die katalysierte Umsetzung mit der ungesättigten Isocyanat-Verbindung V bei einer Temperatur von 60 bis 150 °C, bevorzugt 80 bis 130 °C, und einem Druck von 0,5 bis 2 bar, bevorzugt 0,8 bis 1,2 bar stattfindet.

12. Verfahren zur Herstellung eines Makromers gemäß einem der Ansprüche 1 bis 11, wobei das Makromer ein Molekulargewicht Mw von 5000 bis 25000 g/mol, bevorzugt 7000 bis 22000 g/mol, besonders bevorzugt 1000 bis 19000 g/mol aufweist, wobei das Molekulargewicht Mw rechnerisch aus der OH-Zahl bestimmt wird, bestimmt nach DIN 53240.

13. Makromer, herstellbar nach dem Verfahren eines der Ansprüche 1 bis 12.

14. Verfahren zur Herstellung einer Polymerpolyoldispersion, wobei mindestens ein Makromer, herstellbar nach dem Verfahren eines der Ansprüche 1 bis 12, mit mindestens einem Polyetherpolyol sowie Styrol und Acrylnitil. unter Verwendung von 0,5 bis 10% des oben beschriebenen Makromers, bevorzugt 1 bis 8 %, besonders bevorzugt 2 bis 5% umgesetzt wird.

15. Verwendung einer Polymerpolyoldispersion, herstellbar gemäß Anspruch 14, zur Herstellung eines Polyurethans durch Umsetzung mit mindestens einem Di- oder Polyisocyanat und wahlweise mindestens einem Treibmittel.

**Claims**

1. A process for preparing a macromer by catalyzed reaction of a hexafunctional polyol P with at least one unsaturated isocyanate compound V which contains at least one isocyanate group reactive with a Zerewitinoff-active compound, using 1.5 to 1.8 mol of the unsaturated isocyanate compound V, based on the macromer, and a catalyst K, where the unsaturated isocyanate compound V contains precisely one isocyanate group reactive with a Zerewitinoff-active compound and where the polyol P has been prepared by reacting sorbitol with at least one alkylene oxide with catalysis by base.

2. The process for preparing a macromer according to claim 1, wherein the macromer is obtained by reacting 1,1-dimethyl-meta-isopropenylbenzyl isocyanate (TMI) with a polyether polyol PM.

3. The process for preparing a macromer according to either of claims 1 and 2, wherein the EO content of the macromer is between 1% and 25%, preferably 2% and 15%, more preferably between 3% and 8%.

4. The process for preparing a macromer according to any of claims 1 to 3, wherein more than 1.5 to less than 1.8 mol of the unsaturated isocyanate compound V are used, based on the macromer.

5. The process for preparing a macromer according to any of claims 1 to 4, wherein the polyol P has been prepared by reacting sorbitol with a mixture of ethylene oxide and propylene oxide with catalysis by base, the fraction of ethylene oxide in the macromer being preferably 1-25 wt%, more preferably 2-15 wt%, very preferably 3 to 8 wt%, based on the total mass of the macromer.

6. The process for preparing a macromer according to any of claims 1 to 5, wherein the polyol P has been prepared by reacting sorbitol with at least one alkylene oxide with catalysis by base, the basic catalyst being selected from the group consisting of potassium hydroxide and cesium hydroxide, preferably cesium hydroxide.

7. The process for preparing a macromer according to any of claims 1 to 6, wherein the polyol P has a molecular weight Mw of 5000 to 25 000 g/mol, preferably 7000 to 22 000 g/mol, more preferably 10 000 to 19 000 g/mol, the molecular weight Mw being determined arithmetically from the OH number, determined according to DIN 53240.

8. The process for preparing a macromer according to any of claims 1 to 7, wherein the unsaturated compound V is 1,1-dimethyl-meta-isoprenylbenzyl isocyanate (TMI).

9. The process for preparing a macromer according to any of claims 1 to 8, wherein the catalyst K comprises tin or bismuth.

10. The process for preparing a macromer according to any of claims 1 to 9, wherein the catalyst K is dibutyltin dilaureate (DBTL).

11. The process for preparing a macromer according to any of claims 1 to 10, wherein the catalyzed reaction with the unsaturated isocyanate compound V takes place at a temperature of 60 to 150°C, preferably 80 to 130°C, and a pressure of 0.5 to 2 bar, preferably 0.8 to 1.2 bar.

12. The process for preparing a macromer according to any of claims 1 to 11, wherein the macromer has a molecular weight Mw of 5000 to 25 000 g/mol, preferably 7000 to 22 000 g/mol, more preferably 1000 to 19 000 g/mol, the molecular weight Mw being determined arithmetically from the OH number, determined according to DIN 53240.

13. A macromer preparable by the process of one of claims 1 to 12.

14. A process for preparing a polymer polyol dispersion by reacting at least one macromer preparable by the process of one of claims 1 to 12 with at least one polyether polyol and also styrene and acrylonitrile, using 0.5% to 10% of the above-described macromer, preferably 1% to 8%, more preferably 2% to 5%.

15. The use of a polymer polyol dispersion preparable according to claim 14 for producing a polyurethane by reaction with at least one di- or polyisocyanate and electively at least one blowing agent.

**Revendications**

1. Procédé pour la préparation d'un macromère par transformation catalysée d'un polyols P fonctionnalisé six fois avec au moins un composé V de type isocyanate insaturé qui présente au moins un groupe isocyanate réactif avec un composé actif au sens de Zéréwitinoff, 1,5 à 1,8 mole du composé V de type isocyanate insaturé étant utilisée par rapport au macromère et un catalyseur K étant utilisé, le composé V de type isocyanate insaturé présentant exactement un groupe isocyanate réactif avec un composé actif au sens de Zéréwitinoff et le polyol P ayant été préparé par réaction de sorbitol avec au moins un oxyde d'alkylène sous catalyse basique.

**2.** Procédé pour la préparation d'un macromère selon la revendication 1, le macromère étant obtenu par réaction de 1,1-diméthyl-méta-isopropénylbenzylisocyanate (TMI) avec un polyétherpolyol PM.

**3.** Procédé pour la préparation d'un macromère selon l'une quelconque des revendications 1 et 2, la teneur en OE du macromère se situant entre 1 et 25 %, préférablement 2 et 15 %, particulièrement préférablement entre 3 et 8 %.

**4.** Procédé pour la préparation d'un macromère selon l'une quelconque des revendications 1 à 3, plus de 1,5 à moins de 1,8 mole du composé V de type isocyanate insaturé étant utilisée, par rapport au macromère.

**5.** Procédé pour la préparation d'un macromère selon l'une quelconque des revendications 1 à 4, le polyol P ayant été préparé par réaction de sorbitol avec un mélange d'oxyde d'éthylène et d'oxyde de propylène sous catalyse basique, préférablement la proportion d'oxyde d'éthylène dans le macromère étant de 1 à 25 % en poids, particulièrement préférablement 2 à 15 % en poids, tout particulièrement préférablement 3 à 8 % en poids, par rapport à la masse totale du macromère.

**6.** Procédé pour la préparation d'un macromère selon l'une quelconque des revendications 1 à 5, le polyol P ayant été préparé par réaction de sorbitol avec au moins un oxyde d'alkylène sous catalyse basique, le catalyseur basique étant choisi dans le groupe constitué par l'hydroxyde de potassium et l'hydroxyde de césium, préférablement l'hydroxyde de césium.

**7.** Procédé pour la préparation d'un macromère selon l'une quelconque des revendications 1 à 6, le polyol P présentant un poids moléculaire Mw de 5 000 à 25 000 g/mole, préférablement 7 000 à 22 000 g/mole, particulièrement préférablement 10 000 à 19 000 g/mole, le poids moléculaire Mw étant déterminé par calcul à partir de l'indice d'OH, déterminé selon la norme DIN 53240.

**8.** Procédé pour la préparation d'un macromère selon l'une quelconque des revendications 1 à 7, le composé V insaturé étant le 1,1-diméthyl-méta-isoprénylbenzylisocyanate (TMI).

**9.** Procédé pour la préparation d'un macromère selon l'une quelconque des revendications 1 à 8, le catalyseur K contenant de l'étain ou du bismuth.

**10.** Procédé pour la préparation d'un macromère selon l'une quelconque des revendications 1 à 9, le catalyseur K étant le dilaureate de dibutylétain (DBTL).

**11.** Procédé pour la préparation d'un macromère selon l'une quelconque des revendications 1 à 10, la transformation catalysée avec le composé V de type isocyanate insaturé ayant lieu à une température de 60 à 150 °C, préférablement 80 à 130 °C, et à une pression de 0,5 à 2 bars, préférablement 0,8 à 1,2 bar.

**12.** Procédé pour la préparation d'un macromère selon l'une quelconque des revendications 1 à 11, le macromère présentant un poids moléculaire Mw de 5 000 à 25 000 g/mole, préférablement 7 000 à 22 000 g/mole, particulièrement préférablement 1 000 à 19 000 g/mole, le poids moléculaire Mw étant déterminé par calcul à partir de l'indice d'OH, déterminé selon la norme DIN 53240.

**13.** Macromère, qui peut être préparé par le procédé selon l'une quelconque des revendications 1 à 12.

**14.** Procédé pour la préparation d'une dispersion de polyol polymérique, au moins un macromère, qui peut être préparé par le procédé selon l'une quelconque des revendications 1 à 12, étant transformé avec au moins un polyétherpolyol ainsi que du styrène et de l'acrylonitrile, avec l'utilisation de 0,5 à 10 % du macromère décrit ci-dessus, préférablement 1 à 8 %, particulièrement préférablement 2 à 5 %.

**15.** Utilisation d'une dispersion de polyol polymérique, qui peut être préparée selon la revendication 14, pour la préparation d'un polyuréthane par transformation avec au moins un diisocyanate ou polyisocyanate et au choix au moins un agent gonflant.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6013731 A
- EP 0162589 A
- EP 1930356 B1
- DE 102011078170
- WO 2000309718 A
- US 4522976 A
- US 20060025491 A
- US 5093412 A
- EP 1624006 A1